# EUROPÄISCHE PATENTSCHRIFT

(11) **EP 2 129 842 B1**
(45) Veröffentlichungstag und Bekanntmachung des Hinweises auf die Patenterteilung: **05.12.2012**
(21) Anmeldenummer: 08734328.1
(22) Anmeldetag: 28.02.2008
(51) Int. Cl.: E04B 2/76, F16B 7/18

(54) **VERBINDUNG VON PROFILSTÄBEN**
CONNECTION OF PROFILED BARS
RACCORD DE BARRES PROFILÉES

(30) Priorität: 28.02.2007 DE 102007010118
(43) Veröffentlichungstag der Anmeldung: 09.12.2009
(73) Patentinhaber: Teufel, Manfred, 72108 Rottenburg a.N. (DE)
(72) Erfinder: Teufel, Manfred, 72108 Rottenburg a.N. (DE)
(74) Vertreter: Kohler Schmid Möbus
(86) Internationale Anmeldenummer: PCT/DE2008/000347
(87) Internationale Veröffentlichungsnummer: WO 2008/104168

(56) Entgegenhaltungen:
- DE-A1-102004 023 143
- DE-B3- 10 330 784
- DE-U1- 20 209 163

## Beschreibung

Die Erfindung betrifft eine Vorrichtung zur Verbindung von Profilstäben gemäß dem Oberbegriff des Patentanspruchs 1.

Aus der DE 33 28 142 Al ist eine Konstruktion aus Profilstäben mit Längsnuten bekannt, welche Profilstäbe durch eine Schraubverbindung miteinander verbindet. Dazu wird eine Schraube in einer mittig im Profilquerschnitt angeordneten Schraubenverstellbohrung eingeschraubt und die Verbindung durch Verklemmung des Schraubenkopfes in einer Längsnut realisiert. Problematisch sind bei der offenbarten Verbindung allerdings die dauerhaften Festigkeit der Verbindung, insbesondere bei einer Biegebeanspruchung, und vor allem auch die nicht vorhandene Möglichkeit eines Nachjustierens der Verbindungsschraube.

Die DE 103 30 784 B3 offenbart einen Nutenstein zur Verbindung zweier Profilstäbe. Der Nutenstein ist hierzu über zwei Schrauben mit einem Ankerbolzen verbindbar. Die Schrauben werden in dem Ankerbolzen durch senkrecht im Ankerbolzen ausgebildete Bohrungen geführt. Der Nutenstein weist ferner Schneidkrallen auf, um eine zuverlässige elektrische Kontaktierung der Profilstäbe zu gewährleisten.

Weiterhin ist aus der DE 10 2004 023 143 A1 eine Befestigungsvorrichtung mit konischen Langlöchern zur Installation einer Glasplatte an einer Wand bekannt. Durch die Konizität der Langlöcher können Schraubenköpfe von Senkkopfschrauben aufgenommen werden.

Schließlich offenbart die DE 202 09 163 U1 einen Verbindungsbolzen mit Klemmelement für Profilelemente. Aufgabe des Klemmelements ist es dabei, zu verhindern, dass der Verbindungsbolzen in dem Profil des Profilelements von alleine verrutschen kann.

Es leitet sich daher die Aufgabe der Erfindung ab, eine verbesserte und zugleich vereinfachte Vorrichtung zur Verbindung von Profilstäben anzugeben, die die Nachteile des Stands der Technik zumindest wesentlich reduziert.

Die Aufgabe in Bezug auf die anzugebende Vorrichtung zur Verbindung von Profilstäben wird erfindungsgemäß dadurch gelöst, dass eine Bohrung zur Führung und Positionierung einer Schraube im Widerlager in Form eines Langloches ausgebildet ist, wobei die Außenwand des Langlochs zur mittigen Ebene hin längs zur Ausdehnung des Langlochs in Form einer Verjüngung ausgestaltet ist.

Der Vorteil der erfindungsgemäßen Verbindung ist, dass damit die Belastbarkeit der Verbindung in dynamischer aber auch in statischer Hinsicht erheblich gesteigert ist. Die Festigkeit, insbesondere die Biegefestigkeit der Verbindung, ist somit wesentlich erhöht.

Dies folgt daraus, dass die Verbindung über mehrere Schrauben erfolgt, vorzugsweise zwei Schrauben, die das Widerlager mit der Gewindeplatte verbinden. Das Widerlager ist bei der erfindungsgemäßen Verbindung ein Befestigungselement, welches in der Durchgangsbohrung zwischen zwei paarweise angeordnete Längsnuten angeordnet ist. Bei der Verbindung wird das Widerlager somit durch den mittleren Steg, der die Längsnut von einander trennt, abgestützt. In den durch die Durchgangsbohrung verbundenen Längsnuten sind bei der Erfindung die Verbindungsschrauben angeordnet, welche vorzugsweise mit ihrem Kopfbereich am Widerlager abgestützt werden und deren Gewindebereich in der Gewindeplatte eingeschraubt ist. Die Gewindeplatte ist in einer Längsnut des zweiten Profistabes in Längsrichtung verschiebbar, wodurch die relative Positionierung der zu verbindenden Profilstäbe variiert werden kann. Durch Anziehen der Verbindungsschrauben wird die erforderliche Kraft über das Widerlager und die Gewindeplatte in die Profilstäbe übertragen und die Verbindung realisiert. Durch einen symmetrischen Krafteintrag durch die zwei Verbindungsschrauben, d. h. gleiches Anzugmoment für beide Verbindungsschrauben, ist gewährleistet, dass die Verbindung nicht schon bei der Montage mit einem Biegemoment beaufschlagt ist.

Gleichzeitig ist durch die Ausgestaltung der Verbindung mit den zwei Verbindungsschrauben, sicher gestellt, dass das Widerlager bei der Montage und auch im Befestigungszustand nicht aus dem ersten Profilstab herausrutscht. Dies erhöht vorteilhaft die Sicherheit der Verbindung.

Auf Grund der Zugänglichkeit der Schraubenköpfe im Bereich der ihrer Abstützung am Widerlager ist ein Anziehen beziehungsweise ein nachträgliches Korrigieren des Anzugsmoments auch im Einbauzustand jederzeit möglich. Dies ist insbesondere dann von Vorteil, wenn sich die Verbindung auf Grund von Betriebsbeanspruchung gelockert hat und die Verbindung nachjustiert werden muss. Diesbezüglich ist es insbesondere von Vorteil, wenn eine Losdrehsicherung beispielsweise in Form eines Schraubensicherungsklebstoffs auf dem Gewinde der Verbindungsschraube und/oder der Gewindeplatte vorgesehen ist.

Vorteilhafte Ausgestaltungen der erfindungsgemäßen Verbindung ergeben sich wenn das Widerlager und/oder die Gewindeplatte zumindest in Teilbereichen ihres Außenumfangs die Form eines Kreiszylinders aufweisen, wobei der Kreiszylinder einen an den Durchmesser der Durchgangsbohrung angepassten Durchmesser aufweist. Dadurch wird eine großflächigere und spielfreiere Kraftübertragung vom Widerlager und/oder Gewindeplatte auf den entsprechenden Profilstab gewährleistet. Die beschriebene Ausgestaltung der Gewindeplatte ist insbesondere dann erforderlich, wenn zwei Profilstäbe mit ihren Enden auf Stoß verbunden werden. Dazu wird die Gewindeplatte analog eines Widerlagers in der Durchgangsbohrung am Profilstab angeordnet und die Verbindung wie bereits beschrieben montiert.

Weitere Vorteile und vorteilhafte Ausgestaltungen der Erfindung sind der nachfolgenden Beschreibung, den Zeichnungen und den Ansprüchen entnehmbar.

### Zeichnungen

Ein Ausführungsbeispiel der Erfindung ist in den Zeichnungen dargestellt und im folgenden näher beschrieben.

Es zeigen:

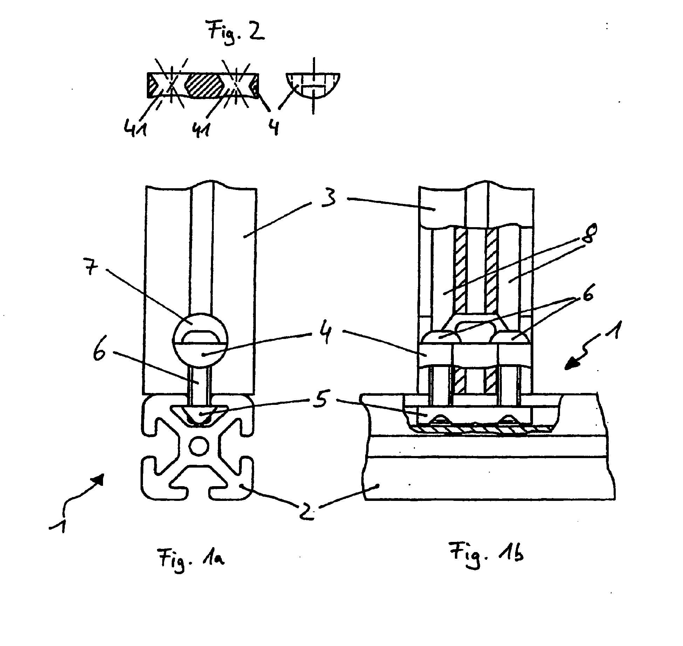

- Fig. 1a: zeigt in schematischer Darstellung eine Vorderansicht einer erfindungsgemäßen Verbindung 1 von zwei Profilstäben 2, 3,
- Fig. 1b: zeigt in schematischer Darstellung eine Seitenansicht einer erfindungsgemäßen Verbindung 1 von zwei Profilstäben 2, 3,
- Fig. 2: zeigt ebenfalls in schematischer Darstellung eine Detailansicht einer Ausgestaltung des Widerlagers 4.

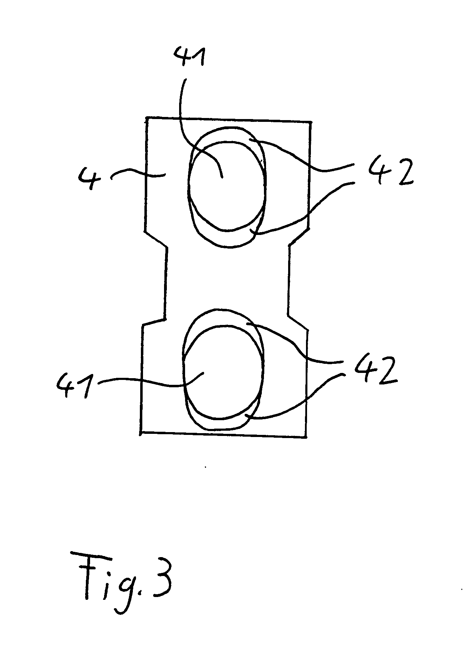

- Fig. 3: zeigt in schematischer Darstellung eine Draufsicht eines erfindungsgemäßen Widerlagers 4 mit Verjüngung 42.

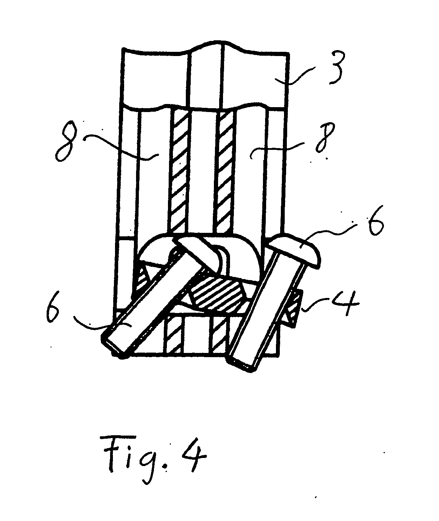

- Fig. 4: zeigt in schematischer Darstellung eine Seitenansicht eines Profilstabes 3 beim schrägen Einführen der zweiten Schraube 6 in das Widerlager 4.

### Beschreibung des Ausführungsbeispiels

Zum Aufbau eines Gestells aus mehreren Profilstäben 2, 3 aus Aluminium wird eine Verbindung 1 von zwei Profilstäben 2, 3 derart realisiert, dass die Profilstäbe 2, 3 über ein Widerlager 4 und eine Gewindeplatte 5 mittels Schrauben 6 verbunden werden.

Dazu wird im ersten Profilstab 3 an dessen Ende mittels herkömmlicher Bearbeitungsmethoden durch Bohren eine Durchgangsbohrung 7 hergestellt. Diese Bohrung hat einen Durchmesser vom 20mm und verbindet zwei gegenüber liegende Längsnuten 8 miteinander. Der Bohrungsmitteilpunkt liegt dabei im Abstand von 20mm vom Ende des Profilstabs 3. In der Durchgangsbohrung wird nachfolgend das Widerlager 4 angeordnet.
Das Widerlager 4 weist dabei in der Seitenansicht die Form eines Kreisabschnittes mit dem Radius 10mm auf. Über seine Längserstreckung weist somit das Widerlager 4 im Wesentlichen die Form eines halben Kreiszylinders auf. Durch seine Ausgestaltung ist das Widerlager 4 genau und mit wesentlich reduziertem Spiel in der Durchgangsbohrung 7 anzuordnen. Ferner sind im Widerlager 4 zwei Materialdurchbrüche 41 eingebracht, die zur Führung und Positionierung zweier Halbrundschrauben 6 dienen. Die Materialdurchbrüche 41 entsprechen in ihrer Form der Ober- und Unterseite eines abgerundeten Langloches welche jeweils sich zur Mitte hin kegelförmig verjüngen (Verjüngung) 42, in denen die Halbrundschrauben 6 geführt und positioniert werden können. Durch diese Ausgestaltung ist es gleichfalls auch vorteilhaft möglich die Schrauben 6 schräg in das Widerlager 4 einzubringen und dann zu positionieren, sofern dieses bereits im Profilstab 3 angeordnet ist. Dies ist insbesondere für die Montierbarkeit der zweiten Schraube 6 im eingebauten Widerlager 4 erforderlich.

Nach Anordnung des Widerlagers 4 im Profilstab 3 und Positionierung der Schrauben 6 im Widerlager 4 wird die Gewindeplatte 5, die in ihrer Form an den Querschnitt einer Längsnut angepasst ist, an den beiden Schrauben 6 befestigt.

Auf die Gewindeplatte 5 wird nun entsprechend der erforderlichen Anordnung der zweite Profilstab 2 geschoben, so dass die Gewindeplatte 5 in einer Längsnut gleiten kann. Wenn die Profilstäbe die erforderliche Positionierung zueinander aufweisen werden die Schrauben 6 mit dem vorgegebenen Anzugmoment fest gezogen. Die Zugänglichkeit der Schraubenköpfe ist durch die Dimension der Durchgangsbohrung 7 gewährleistet. Ein Schraubensicherungsklebstoff auf Epoxidharzbasis verhindert eine Lockerung der Schraubverbindung.

## Patentansprüche

1. Vorrichtung zur winkeligen Verbindung (1) von Profilstäben (2, 3), mit einem Widerlager (4) und einer Gewindeplatte (5), die über zwei Schrauben (6) miteinander verbindbar sind, wobei das Widerlager (4) in einer Durchgangsbohrung (7) durch den ersten Profilstab (3) senkrecht durch dessen Mittellinie und zwischen zwei paarweise angeordneten Längsnuten(8) anordenbar ist und die Gewindeplatte (5) in einer Längsnut (8) des zweiten Profilstabs (2) anordenbar ist, **dadurch gekennzeichnet, dass** eine Bohrung (41) zur Führung und Positionierung einer Schraube (6) im Widerlager (4) in Form eines Langloches ausgebildet ist, wobei die Außenwand des Langlochs (41) zur mittigen Ebene hin längs zur Ausdehnung des Langlochs in Form einer Verjüngung (42) ausgestaltet ist.

2. Vorrichtung nach Anspruch 1, **dadurch gekennzeichnet, dass** die Verjüngung (42) einen kreisförmigen Durchmesser hat.

3. Vorrichtung nach einem der vorhergehenden Ansprüche, **dadurch gekennzeichnet, dass** das Widerlager (4) zumindest in Teilbereichen des Außenumfangs die Form eines Kreiszylinders aufweist.

4. Vorrichtung nach einem der vorhergehenden Ansprüche, **dadurch gekennzeichnet, dass** die Gewindeplatte (5) zumindest in Teilbereichen des Außenumfangs die Form eines Kreiszylinders aufweist.

## Claims

1. Device for the angled connection (1) of structural sections (2, 3), with a stop bar (4) and a threaded plate (5) which are connectable to each other with two screws (6), the stop bar (4) being arrangeable in a through bore (7) through the first section (3) perpendicularly through the centreline of the latter and between two longitudinal grooves (8) arranged in pairs and the threaded plate (5) being arrangeable in a longitudinal groove (8) in the second section (2), **characterized in that** a bore (41) in the form of a slot is formed in the stop bar (4) to guide and position a screw (6), the outer wall of the slot (41) being formed with a taper (42) towards the central plane, longitudinally with respect to the extent of the slot.

2. Device according to Claim 1, **characterized in that** the taper (42) has a circular diameter.

3. Device according to either of the preceding claims, **characterized in that** the stop bar (4) is in the form of a circular cylinder at least in partial regions of the outer circumference.

4. Device according to any one of the preceding claims, **characterized in that** the threaded plate (5) is in the form of a circular cylinder at least in partial regions of the outer circumference.

## Revendications

1. Dispositif de raccordement coudé (1) de barres profilées (2, 3) avec un aboutement (4) et une plaque filetée (5), qui peuvent être reliés l'un à l'autre via deux vis (6), dans lequel l'aboutement (4) peut être aménagé dans un alésage de passage (7) à travers la première barre profilée (3) perpendiculairement par son axe central et entre deux gorges longitudinales (8) aménagées par paires et la plaque filetée (5) peut être disposée dans une gorge longitudinale (8) de la seconde barre profilée (2), **caractérisé en ce qu'**un alésage (41) pour guider et positionner une vis (6) est formé dans l'aboutement (4) sous la forme d'un trou allongé, la paroi externe du trou allongé (41) allant jusqu'au plan central se présentant, longitudinalement à l'extension du trou allongé, sous la forme d'un rétrécissement (42).

2. Dispositif selon la revendication 1, **caractérisé en ce que** le rétrécissement (42) a un diamètre de forme circulaire.

3. Dispositif selon l'une quelconque des revendications précédentes, **caractérisé en ce que** l'aboutement (4) présente au moins dans des zones partielles de la périphérie externe la forme d'un cylindre à base circulaire.

4. Dispositif selon l'une quelconque des revendications précédentes, **caractérisé en ce que** la plaque filetée (5) présente au moins dans des zones partielles de la périphérie externe la forme d'un cylindre à base circulaire.
